# EUROPÄISCHE PATENTSCHRIFT

(11) **EP 2 494 174 B1**
(45) Veröffentlichungstag und Bekanntmachung des Hinweises auf die Patenterteilung: **04.12.2013**
(21) Anmeldenummer: 10771022.0
(22) Anmeldetag: 20.10.2010
(51) Int. Cl.: F02D 41/06, F02D 41/14, F02B 75/22

(54) **VERFAHREN ZUR STEUERUNG UND REGELUNG EINER BRENNKRAFTMASCHINE IN V-ANORDNUNG**
METHOD FOR THE CONTROL AND REGULATION OF A V-TYPE INTERNAL COMBUSTION ENGINE
PROCÉDÉ POUR COMMANDER ET RÉGULER UN MOTEUR À COMBUSTION INTERNE EN V

(30) Priorität: 30.10.2009 DE 102009051389
(43) Veröffentlichungstag der Anmeldung: 05.09.2012
(73) Patentinhaber: MTU Friedrichshafen GmbH, 88045 Friedrichshafen (DE)
(72) Erfinder: DÖLKER, Armin, 88048 Friedrichshafen (DE)
(74) Vertreter: Winter, Josef
(86) Internationale Anmeldenummer: PCT/EP2010/006417
(87) Internationale Veröffentlichungsnummer: WO 2011/050919

(56) Entgegenhaltungen:
- EP-A2- 2 030 857
- DE-A1-102007 000 742
- DE-A1-102007 034 317
- DE-B3-102006 040 441

## Beschreibung

Die Erfindung betrifft ein Verfahren zur Steuerung und Regelung einer Brennkraftmaschine in V-Anordnung mit einem eigenständigen A-seitigen Common-Railsystem und einem eigenständigen B-seitigen Common-Railsystem, bei dem die Drehzahl der Brennkraftmaschine in einem Drehzahl-Regelkreis geregelt wird.

Bei einer Brennkraftmaschine mit Common-Railsystem wird die Güte der Verbrennung maßgeblich über das Druckniveau im Rail bestimmt. Zur Einhaltung der gesetzlichen Emissionsgrenzwerte wird daher der Raildruck geregelt. Typischerweise umfasst ein Raildruck-Regelkreis eine Vergleichsstelle zur Bestimmung einer Regelabweichung, einen Druckregler zum Berechnen eines Stellsignals, die Regelstrecke und ein Softwarefilter im Rückkopplungszweig zur Berechnung des Ist-Raildrucks aus den Rohwerten des Raildrucks. Berechnet wird die Regelabweichung aus der Differenz von Soll- und Ist-Raildruck. Die Regelstrecke umfasst das Druckstellglied, das Rail und die Injektoren zum Einspritzen des Kraftstoffs in die Brennräume der Brennkraftmaschine. So zeigt beispielweise die DE 103 30 466 B3 ein entsprechendes Common-Railsystem, bei dem der Druckregler über das Stellsignal auf eine niederdruckseitig angeordnete Saugdrossel zugreift. Über die Saugdrossel wiederum wird der Zulaufquerschnitt zur Hochdruckpumpe und damit das geförderte Kraftstoffvolumen festgelegt.

Aus der DE 10 2007 034 317 A1 ist eine Brennkraftmaschine mit einem A-seitigen und einem B-seitigen Common-Railsystem bekannt, welche identisch aufgebaut sind. Die beiden Common-Railsysteme sind hydraulisch voneinander entkoppelt und erlauben daher eine unabhängige Regelung des A-seitigen sowie B-seitigen Raildrucks. Über die getrennte Regelung werden die Druckschwankungen in den Rails verringert. Eine korrekte Raildruck-Regelung setzt einen fehlerfrei arbeitenden Rail-Drucksensor voraus. Der Ausfall eines Rail-Drucksensors oder beider Rail-Drucksensoren verursacht bei dem angegebenen System einen nicht definierten Zustand der Druckregelung und kann einen kritischen Zustand der Brennkraftmaschine bewirken, da keine Fehlerabsicherung aufgezeigt ist.

Aus der nicht vorveröffentichten deutschen Patentanmeldung mit dem amtlichen Aktenzeichen DE10 2008 036 300.6 ist ebenfalls eine Brennkraftmaschine mit einem eigenständigen A-seitigen Common-Railsystem und einem eigenständigen B-seitigen Common-Railsystem und Drehzahlregelung bekannt. Beim dargestellten Drehzahl-Regelkreis bestimmt ein Drehzahlregler anhand der Drehzahl-Regelabweichung ein Soll-Moment, welches auf einen Maximalwert begrenzt wird. Berechnet wird der Maximalwert in Abhängigkeit der Ist-Drehzahl, des Ladeluftdrucks und einem Luftmassenverhältnis. In Abhängigkeit des begrenzten Soll-Moments wird dann über ein Wirkungsgrad-Kennfeld eine Soll-Einspritzmenge berechnet. Aus der Soll-Einspritzmenge wiederum und einem Raildruck wird über ein Injektorkennfeld dann die Spritzdauer zur Ansteuerung eines Injektors berechnet. Soll ein A-seitiger Injektor angesteuert werden, so wird als Eingangsgröße des Injektorkennfelds der A-seitige Ist-Raildruck verwendet. Soll ein B-seitiger Injektor angesteuert werden, so wird als Eingangsgröße des Injektorkennfelds der B-seitige Ist-Raildruck verwendet. Die Umschaltung vom A-seitigen auf den B-seitigen Ist-Raildruck erfolgt über die Zündfolge. Der Ausfall eines Rail-Drucksensors verursacht daher einen nicht definierten Zustand.

Beim Startvorgang liegt eine große Drehzahl-Regelabweichung vor, da zum Beispiel als Soll-Drehzahl der Leerlauf-Drehzahlwert von 600 1/min vorgegeben wird, während die Ist-Drehzahl der Anlasser-Drehzahl von 120 1/min entspricht. Aufgrund der großen Drehzahl-Regelabweichung berechnet der Drehzahlregler ein sehr hohes Soll-Moment, sodass elektrisch eine Einspritzung initiiert wird. Der physikalische Öffnungsdruck der Einspritzdüsen liegt im Bereich von 300 bis 350 bar. Dies bedeutet, dass die Einspritzdüsen erst dann öffnen, wenn der Raildruck diese Druckschwelle erreicht bzw. überschreitet. Ist der Raildruck kleiner als der Düsenöffnungsdruck, so bleiben die Einspritzdüsen geschlossen, auch dann, wenn die Injektoren bestromt werden. Durch die elektrische Ansteuerung der Injektoren wird jedoch eine entsprechende Steuermenge an Kraftstoff vom Injektor aus der Zuleitung vom Rail entnommen. Die entnommene Steuermenge verursacht einen verzögerten Druckaufbau im Rail und bewirkt einen verzögerten Startvorgang.

Der Erfindung liegt daher die Aufgabe zugrunde, den Starvorgang einer Brennkraftmaschine mit einem eigenständigen A-seitigen und eigenständigen B-seitigen Common-Railsystem sicherer und schneller zu gestalten.

Gelöst wird diese Aufgabe durch ein Verfahren zur Steuerung und Regelung einer gattungsgemäßen Brennkraftmaschine, bei dem die Drehzahl der Brennkraftmaschine in einem Drehzahl-Regelkreis geregelt wird und bei dem ein Soll-Moment als Stellgröße des Drehzahlreglers während des Startvorgangs auf ein Startmoment zur Darstellung einer Soll-Einspritznullmenge begrenzt wird. Eine positive Soll-Einspritzmenge wird erst dann freigegeben wird, wenn eine verifizierte Motordrehzahl vorliegt, sowohl ein A-seitiger Rail-Drucksensor als auch ein B-seitiger Rail-Drucksensor fehlerfrei sind und sowohl der A-seitige Ist-Raildruck als auch der B-seitige Ist-Raildruck einen Startraildruck übersteigen. Freigegeben wird die positive Soll-Einspritzmenge, indem das Soll-Moment auf ein Betriebsmoment als Maximalmoment begrenzt wird, welches zumindest in Abhängigkeit der Ist-Drehzahl berechnet wird.

Zentraler Gedanke der Erfindung ist es, das Soll-Moment als Ausgangsgröße des Drehzahlreglers beim Motorstart so lange zu begrenzen, bis ein vorgebbarer Startraildruck von zum Beispiel 300 bar erreicht wird. Die Begrenzung des Soll-Moments erfolgt dabei so, dass sich eine Soll-Einspritznullmenge ergibt. Unter Soll-Einspritznullmenge ist eine Soll-Einspritzmenge von 0 mg/Hub zu verstehen. Mit anderen Worten: Die Einspritzung bleibt solange verriegelt, wie der Raildruck kleiner als der Startraildruck ist. Da nunmehr beim Startvorgang kein Kraftstoff mehr als Ansteuermenge für die Injektoren entnommen wird, erfolgt der Druckaufbau in den beiden Rails mit dem maximal möglichen Druckgradienten. Von Vorteil ist also der verkürzte Startvorgang, zum Beispiel bei einer Brennkraftmaschinen-Generatoranwendung (Notstromaggregat).

Wird während des Startvorgangs ein defekter A-seitiger Rail-Drucksensor und ein intakter B-seitiger Rail-Drucksensor erkannt, so wird die Einspritzung freigegeben, wenn eine verifizierte Motordrehzahl vorliegt und der B-seitige Ist-Raildruck den Startraildruck übersteigt. Der Druckaufbau im B-seitigen Rail erfolgt daher immer noch mit maximaler Dynamik. Die Einspritzung im A-seitigen Rail wird mit der Synchronisierung der Motordrehzahl freigegeben, wodurch der Druckaufbau dieses Rails zwar verzögert erfolgt, aber dennoch ein zuverlässiger Motorstart möglicht ist. Ist der B-seitige Rail-Drucksensor defekt, so wird in entsprechender Weise vorgegangen, das heißt, die Einspritzung bleibt verriegelt bis der A-seitige Ist-Raildruck den Startraildruck übersteigt.

Fallen beide Rail-Drucksensoren aus, so erfolgt die Einspritzung aller Injektoren bereits dann, wenn die Brennkraftmaschine synchronisiert ist, das heißt, wenn eine verifizierte Motordrehzahl vorliegt. Der Raildruck baut sich zwar verzögert auf, ermöglich aber trotz Doppelfehlers immer noch einen zuverlässigen Start der Brennkraftmaschine.

In den Figuren ist ein bevorzugtes Ausführungsbeispiel dargestellt. Es zeigen:
Figur 1 ein Systemschaubild,
Figur 2 ein Blockschaltbild des Drehzahl-Regelkreises,
Figur 3 ein Blockschaltbild,
Figur 4 das Wirkungsgrad-Kennfeld,
Figur 5 ein Zeitdiagramm und
Figur 6 einen Programm-Ablaufplan.

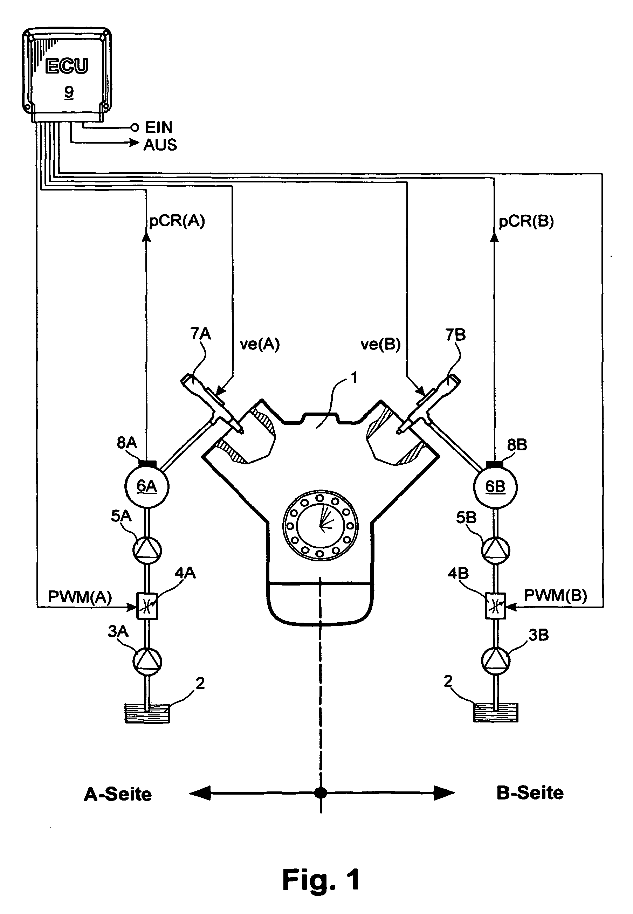

Die Figur 1 zeigt ein Systemschaubild einer elektronisch gesteuerten Brennkraftmaschine 1 mit einem eigenständigen Common-Railsystem auf der A-Seite und einem eigenständigen Common-Railsystem auf der B-Seite. Die beiden Common-Railsysteme sind identisch aufgebaut, aber hydraulisch voneinander getrennt. Das Common-Railsystem auf der A-Seite umfasst als mechanische Komponenten eine Niederdruckpumpe 3A zur Förderung von Kraftstoff aus einem Kraftstofftank 2, eine Saugdrossel 4A zur Beeinflussung des Volumenstroms, eine Hochdruckpumpe 5A, ein Rail 6A und Injektoren 7A zum Einspritzen von Kraftstoff in die Brennräume der Brennkraftmaschine 1. Optional kann das Common-Railsystem auch mit Einzelspeichem ausgeführt sein, wobei dann zum Beispiel im Injektor 7A ein Einzelspeicher als zusätzliches Puffervolumen integriert ist. Das Common-Railsystem auf der B-Seite umfasst dieselben mechanischen Komponenten, welche durch den Zusatz B bei den Bezugszeichen gekennzeichnet sind.

Gesteuert wird die Brennkraftmaschine 1 über ein elektronisches Motorsteuergerät 9 (ECU), welches die üblichen Bestandteile eines Mikrocomputersystems, beispielsweise einen Mikroprozessor, I/O-Bausteine, Puffer und Speicherbausteine (EEPROM, RAM) beinhaltet. In den Speicherbausteinen sind die für den Betrieb der Brennkraftmaschine 1 relevanten Betriebsdaten in Kennfeldern/Kennlinien appliziert. Über diese berechnet das elektronische Steuergerät 9 aus den Eingangsgrößen die Ausgangsgrößen. In der Figur 1 sind als Eingangsgrößen des elektronischen Motorsteuergeräts 9 exemplarisch ein A-seitiger Raildruck pCR(A), ein B-seitiger Raildruck pCR(B) und eine Größe EIN dargestellt. Der A-seitige Raildruck pCR(A) wird durch einen A-seitigen Rail-Drucksensor 8A und der B-seitige Raildruck pCR(B) durch einen B-seitigen Rail-Drucksensor 8B erfasst. Die Größe EIN steht stellvertretend für die weiteren Eingangssignale, beispielsweise für eine Motordrehzahl oder für einen Leistungswunsch des Bedieners. Die dargestellten Ausgangsgrößen des elektronischen Motorsteuergeräts 9 sind ein PWM-Signal PWM(A) zur Ansteuerung der A-seitigen Saugdrossel 4A, ein leistungsbestimmendes Signal ve(A) zur Ansteuerung der A-seitigen Injektoren 7A, ein PWM-Signal PWM(B) zur Ansteuerung der B-seitigen Saugdrossel 4B, ein leistungsbestimmendes Signal ve(B) zur Ansteuerung der B-seitigen Injektoren 7B und eine Größe AUS. Letztere steht stellvertretend für die weiteren Stellsignale zur Steuerung der Brennkraftmaschine 1, beispielsweise ein Stellsignal zur Ansteuerung eines AGR-Ventils. Kennzeichnendes Merkmal der dargestellten Ausführungsform ist die voneinander unabhängige Regelung des A-seitigen Raildrucks pCR(A) vom B-seitigen Raildruck pCR(B).

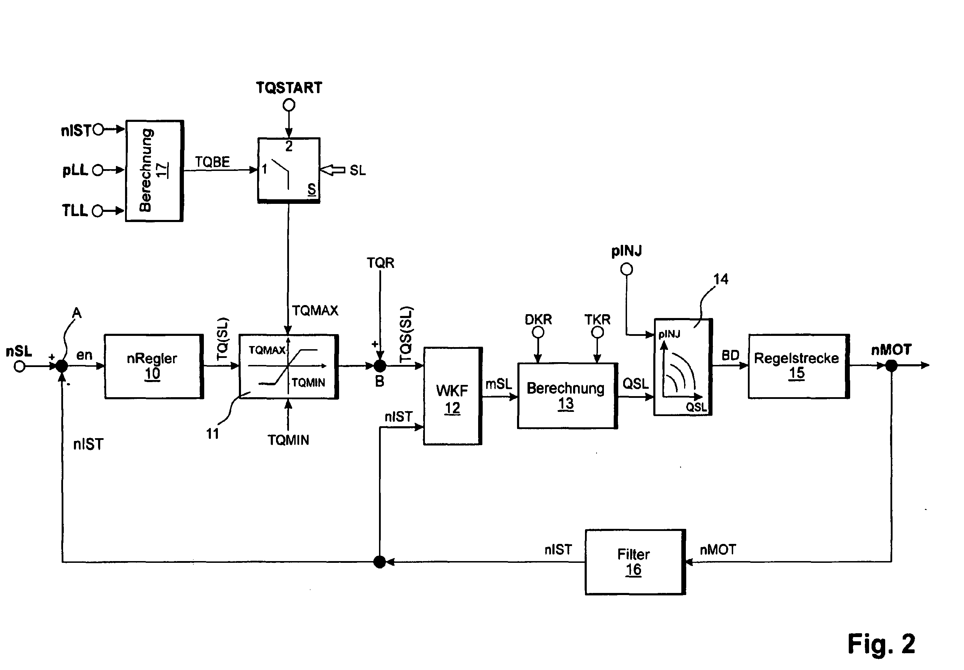

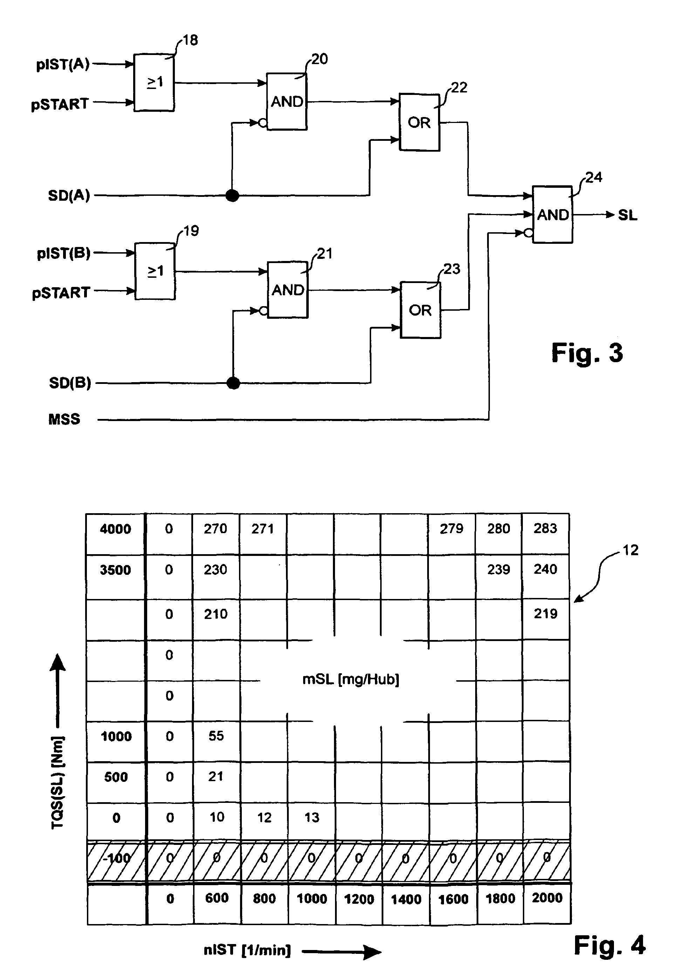

Die Figur 2 zeigt als Blockschaltbild den Drehzahlregelkreis. Die Eingangsgrößen sind die Soll-Drehzahl nSL, ein Maximal-Moment TQMAX, ein Reibmoment TQR, eine Kraftstoffdichte DKR, eine Kraftstofftemperatur TKR und ein Druck pINJ. Die Ausgangsgröße entspricht den Rohwerten der Motordrehzahl nMOT. Aus den Rohwerten der Motordrehzahl nMOT wird über ein Filter 16 die Ist-Drehzahl nIST berechnet. Diese wird an einem Punkt A mit der Soll-Drehzahl nSL verglichen, woraus die Drehzahl-Regelabweichung en resultiert. Aus dieser bestimmt ein Drehzahlregler 10 als Stellgröße ein Soll-Moment TQ(SL). Über eine Begrenzung 11 wird das Soll-Moment TQ(SL) auf ein minimales Moment TQMIN und auf das maximale Moment TQMAX begrenzt. An einem Punkt B wird das begrenzte Moment mit dem Reibmoment TQR addiert. Berechnet wird das Reibmoment über ein -nicht dargestelltes- Reibmoment-Kennfeld in Abhängigkeit der Motordrehzahl und einer virtuellen Temperatur. Das Reibmoment TQR stellt die Abweichung des Motorreibmoments von demjenigen Reibmoment dar, welches unter Normbedingungen bei einem Prüfstandslauf ermittelt wurde. Die Summe der beiden Momente entspricht einem Soll-Summenmoment TQS(SL), welches eine Eingangsgröße eines Wirkungsgrad-Kennfelds 12 ist. Die zweite Eingangsgröße des Wirkungsgrad-Kennfelds entspricht der Ist-Drehzahl nIST. Über das Wirkungsgrad-Kennfeld wird eine Soll-Kraftstoffmasse mSL berechnet. Das Wirkungsgrad-Kennfeld ist in der Figur 4 dargestellt und wird in Verbindung mit dieser Figur näher erläutert. Aus der Soll-Kraftstoffmasse mSL wird über die Berechnung 13 anhand der Kraftstoffdichte DKR und der Kraftstofftemperatur TKR die Soll-Einspritzmenge QSL berechnet, welche eine Eingangsgröße des Injektorkennfelds 14 ist. Die andere Eingangsgröße ist der Druck pINJ. Im Normalbetrieb entspricht der Druck pINJ entweder dem A-seitigen Ist-Raildruck oder dem B-seitigen Ist-Raildruck. Die Umschaltung erfolgt anhand der Zündfolge so, dass derjenige Ist-Raildruck für die Berechnung der Bestromungsdauer BD verwendet wird, welcher zum aktuell anzusteuernden Injektor korrespondiert. Ist beispielsweise der A-seitige Rail-Drucksensor defekt, so wird für das Injektorkennfeld anstelle des A-seitigen Ist-Raildrucks ein konstanter Raildruck-Mittelwert gesetzt. Bei defektem B-seitigen Rail-Drucksensor wird entsprechend der B-seitige Ist-Raildruck auf den Raildruck-Mittelwert, zum Beispiel 800 bar, gesetzt. Mit der Bestromungsdauer BD wird dann entweder ein A-seitiger oder ein B-seitiger Injektor innerhalb der Regelstrecke 15 angesteuert. Die Ausgangsgröße der Regelstrecke 15 entspricht den Rohwerten der Motordrehzahl nMOT. Damit ist der Regelkreis geschlossen.

Ergänzt wird der Drehzahl-Regelkreis durch eine Berechnung 17 und einen Schalter S. Die Eingangsgrößen der Berechnung 17 sind die Ist-Drehzahl nIST, der Ladeluftdruck pLL und die Ladelufttemperatur TLL. Hieraus wird ein Betriebsmoment TQBE berechnet, welches am Schalter S ansteht. Eine weitere Eingangsgröße des Schalters S ist ein Startmoment TQSTART. Die Umschaltung des Schalters S erfolgt über ein Signal SL. Im Leerlauf und im Normalbetrieb hat der Schalter S die Stellung S=1. Das maximale Moment TQMAX entspricht daher dem berechneten Betriebsmoment TQBE. Der Schalter hat die Stellung S=2, solange einer der beiden Ist-Raildrücke den Startraildruck noch unterschreitet. Das maximale Moment TQMAX entspricht hier dem Startmoment TQSTART. Das Startmoment TQSTART wird hierbei so gewählt, dass über das Wirkungsgrad-Kennfeld 12 eine Soll-Kraftstoffmasse von mSL=0 mg/Hub berechnet wird. Folglich ergibt sich auch eine Soll-Einspritzmenge von QSL= 0 mg/Hub, die sogenannte Soll-Einspritznullmenge.

Mit anderen Worten: Über den Wert des Startmoments TQSTART wird die Einspritzung verriegelt. Es gilt daher:
TQSTART ≤ (erste Momentstützstelle Wirkungsgrad-Kennfeld) - TQR,
worin TQR dem Reibmoment entspricht. Freigegeben wird eine Einspritzung erst dann, wenn über das Signal SL der Schalter S in die Stellung S=1 wechselt.

In der Figur 3 ist ein Blockschaltbild zur Bestimmung des Signals SL dargestellt, über welches die Stellung des Schalters S in Figur 2 definiert wird.. Die Eingangsgrößen sind der A-seitige Ist-Raildruck pIST(A), der Startraildruck pSTART, ein Signal SD(A), welches bei defektem A-seitigen Rail-Drucksensor gesetzt wird (SD(A)=1), der B-seitige Ist-Raildruck pIST(B), ein Signal SD(B), welches bei defektem B-seitigen Rail-Drucksensor gesetzt wird (SD(B)=1) und ein Signal MSS. Für das Signal MSS gilt: Das Signal nimmt den Wert MSS=1 an, wenn die Motordrehzahl eine Drehzahlschwelle, zum Beispiel 80 1/min, während eines vorgebbaren Zeitraums von zum Beispiel 2,5 s unterschreitet. Das Signal nimmt den Wert MSS=0 an, wenn die Drehzahlschwelle nach dem Motorstart überschritten wird, also eine verifizierte Motordrehzahl vorliegt. Die Ausgangsgröße des Blockschaltbilds ist das Signal SL. Nach Initialisierung des elektronischen Motorsteuergeräts ist das Signal SL=0, wodurch der Schalter S in der Figur 2 die Stellung 2 einnimmt und das Soll-Moment TQ(SL) auf das Startmoment TQSTART limitiert wird. Die Einspritzung ist daher verriegelt.

Während des Initialisierungsvorgangs des elektronischen Motorsteuergeräts wird die Fehlerfreiheit der beiden Rail-Drucksensoren geprüft. Sind beide fehlerfrei, so werden das Signal SD(A)=0 und das Signal SD(B)=0 gesetzt. Sobald eine verifizierte Motordrehzahl vorliegt, wird das Signal MSS=0 gesetzt. Übersteigt nun der A-seitige Ist-Raildruck pIST(A) den Startraildruck pSTART, so wird eine logische Eins am Ausgang des Vergleichers 18 gesetzt. Da das Signal SD(A) negiert wird, stehen an beiden Eingängen des UND-Glieds 20 eine logische Eins an. Die Und-Bedingung ist daher erfüllt, das heißt, am Ausgang des UND-Glieds 20 erscheint eine Eins. Mit Setzen der Eins am Ausgang des UND-Glieds 20 wechselt entsprechend der Ausgang des ODER-Glieds 22 von Null nach Eins. Diese logische Eins steht ebenfalls am ersten Eingang des UND-Glieds 24 an. Am zweiten Eingang des UND-Glieds 24 erscheint dann eine Eins, wenn der B-seitige Ist-Raildruck pIST(B) ebenfalls den Startraildruck pSTART übersteigt. Am dritten Eingang des UND-Glieds 24 liegt das negierte Signal MSS an, das heißt, sobald eine verifizierte Motordrehzahl vorliegt, steht am dritten Eingang des UND-Glieds 24 eine Eins an. Sind alle Eingänge des UND-Glieds gleich Eins, so wird der Ausgang des UND-Glieds 24 auf den Wert Eins gesetzt, es gilt also SL=1. Der Schalter S in der Figur 2 wechselt daher von der Stellung 2 in die Stellung 1. Damit wird die Einspritzung freigegeben.

Ist der A-seitige Rail-Drucksensor defekt, so bleibt der Ausgangswert des Vergleichers 18 Null. An beiden Eingängen des UND-Glieds 20 steht eine Null an, womit am Ausgang des UND-Glieds 20 eine Null gesetzt bleibt. Da am ODER-Glied 22 eine logische Eins ansteht, nämlich SD(A)=1, erscheint am Ausgang des ODER-Glieds 22 ebenfalls eine Eins. Am ersten Eingang des UND-Glieds 24 steht daher eine Eins an. Übersteigt der B-seitige Ist-Raildruck pIST(B) den Startraildruck pSTART, so steht am zweiten Eingang des UND-Glieds 24 ebenfalls eine Eins an, wenn der B-seitige Rail-Drucksensor nicht defekt ist. Liegt eine verifizierte Motordrehzahl vor, sind alle Eingänge des UND-Glieds 24 gleich Eins, sodass der Ausgang des UND-Glieds 24 auf Eins gesetzt wird. Damit wird die Einspritzung freigegeben. Im umgekehrten Fall, das heißt, der A-seitige Rail-Drucksensor ist fehlerfrei und der B-seitige Rail-Drucksensor ist defekt, erfolgt der Ablauf in entsprechender Weise.

Sind beide Rail-Drucksensoren defekt, so ist das Signal SD(A)=1 und das Signal SD(B)=1, sodass am Ausgang des ODER-Glieds 22 und am Ausgang des ODER-Glieds 23 eine Eins ansteht. Damit wird der Ausgang des UND-Glieds 24 dann auf Eins gesetzt, wenn eine verifizierte Motordrehzahl vorliegt. Die Umschaltung des Schalters S über das Signal SL erfolgt daher lediglich in Abhängigkeit der Motordrehzahl.

In der Figur 4 ist das Wirkungsgrad-Kennfeld 12 dargestellt. Auf der Abszisse ist die Ist-Drehzahl nIST in Umdrehungen je Minute und auf der Ordinate ist das Soll-Summenmoment TQS(SL) in Newtonmetem aufgetragen, welches aus dem begrenzten Soll-Moment TQ(SL) und dem Reibmoment TQR berechnet wird. Die Werte innerhalb des Wirkungsgrad-Kennfelds entsprechen der Soll-Kraftstoffmasse mSL mit der Einheit mg/Hub. So wird bei einer Ist-Drehzahl von nIST=1800 1/min und einem Soll-Summen moment von TQS(SL)=3500 Nm eine Soll-Kraftstoffmasse von mSL=239 mg/Hub berechnet. Die erste Momenten-Stützstelle, hier:
TQS1(SL)= -100 Nm, ist in der Art ausgeführt, dass über den gesamten Drehzahlbereich der Ist-Motordrehzahl eine Soll-Kraftstoffmasse von mSL=0 mg/Hub berechnet wird. Dieser Bereich ist in der Figur zur Verdeutlichung schraffiert dargestellt. Mit anderen Worten: Bei einem Soll-Summenmoment von TQS(SL)s -100 Nm wird die Einspritzung verriegelt.

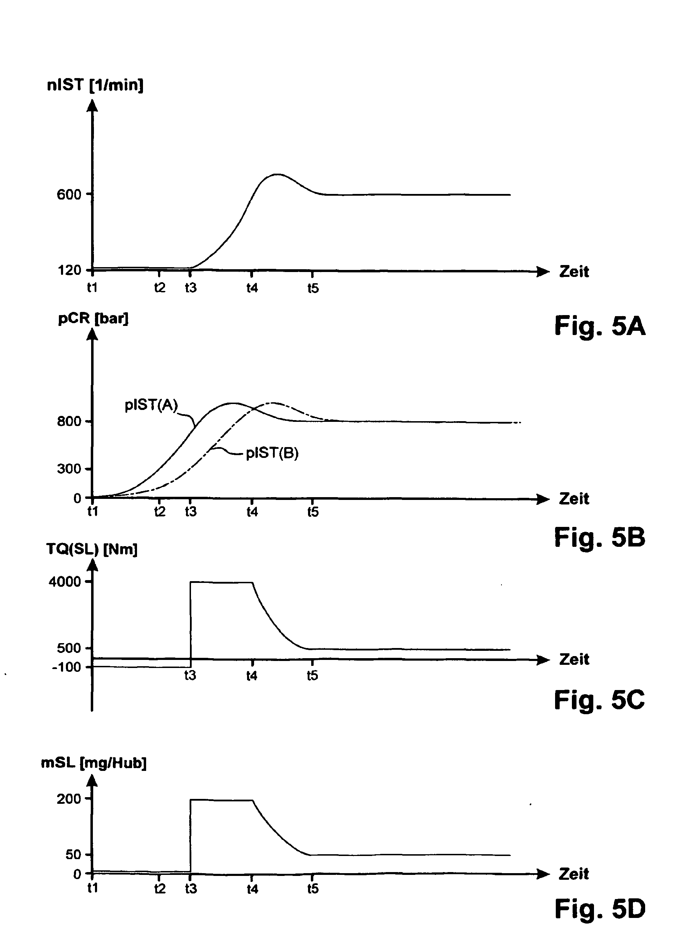

In der Figur 5 ist in einem Zeitdiagramm ein Startvorgang dargestellt. Die Figur 5 besteht aus den Teilfiguren 5A bis 5D. Diese zeigen jeweils über der Zeit: die Ist-Drehzahl nIST in Figur 5A, den Raildruck pCR in Figur 5B, das Soll-Moment TQ(SL) in Figur 5C und die Soll-Kraftstoffmasse mSL in Figur 5D. In der Figur 5B ist als durchgezogene Linie der A-seitige Raildruck pIST(A) und als strichpunktierte Linie der B-seitige Ist-Raildruck pIST(B) eingezeichnet. Beim dargestellten Zeitdiagramm wurde davon ausgegangen, dass beide Rail-Drucksensoren nicht defekt sind, das Wirkungsgrad-Kennfeld der Figur 4 verwendet wird und das Reibmoment TQR=0 Nm ist, da der Startvorgang bei Normbedingungen stattfindet. Damit entspricht das Soll-Summenmoment auf der Ordinate des Wirkungsgrad-Kennfelds dem Soll-Moment TQ(SL), welches über die Begrenzung limitiert wird.

Zum Zeitpunkt t1 wird die Brennkraftmaschine gestartet. Durch das Drehen des Anlassers beginnen sowohl der A-seitige Ist-Raildruck pIST(A) als auch der B-seitige Ist-Raildruck pIST(B) zu steigen. Da der A-seitige Ist-Raildruck pIST(A) und der B-seitige Ist-Raildruck pIST(B) kleiner sind als der Startraildruck pSTART=300 bar, ist das Signal SL=0 und der Schalter S in der Figur 2 hat die Stellung 2. Damit wird das Soll-Moment TQ(SL) zunächst auf den Wert -100 Nm begrenzt und die Soll-Kraftstoffmasse nimmt den Wert mSL=0 mg/Hub an. Zum Zeitpunkt t2 erreicht der A-seitige Ist-Raildruck pIST(A) den Startraildruck pSTART=300 bar. Dies bewirkt keine Änderung, da der B-seitige Ist-Raildruck pIST(B) zu diesem Zeitpunkt noch kleiner als der Startraildruck pSTART ist. Zum Zeitpunkt t3 erreicht auch der B-seitige Ist-Raildruck pIST(B) den Startraildruck pSTART, wodurch das Signal SL=1 wird, der Schalter S (Fig. 2) in die Stellung 1 umgesteuert wird und die Einspritzung nun freigegeben wird. Dies bedeutet, dass das Soll-Moment TQ(SL) nun auf das Betriebsmoment TQBE begrenzt wird. Aus Gründen der Sicherheit wird das Betriebsmoment zum Beispiel auf den Wert TQBE=4000 Nm gesetzt, solange die Ist-Drehzahl nIST kleiner ist als die Soll-Drehzahl, hier: 600 1/min. Entsprechend springt die Soll-Kraftstoffmasse auf den Wert mSL=200 mg/Hub. Die Ist-Drehzahl steigt nun, ausgehend von der Anlasserdrehzahl nIST=120 1/min, an und erreicht zum Zeitpunkt t4 die Leerlaufdrehzahl nIST=600 1/min. Jetzt wird das Betriebsmoment TQBE in Abhängigkeit der der Ist-Drehzahl, des Ladeluftdrucks pLL und der Ladelufttemperatur TLL berechnet. Da die Ist-Drehzahl nIST nach dem Zeitpunkt t4 überschwingt, wird der Drehzahlregler das Sollmoment TQ(SL) als Stellgröße reduzieren. Entsprechend wird auch die Soll-Kraftstoffmasse mSL reduziert. Zum Zeitpunkt t5 ist die Ist-Drehzahl nIST auf die Leerlaufdrehzahl eingeschwungen.

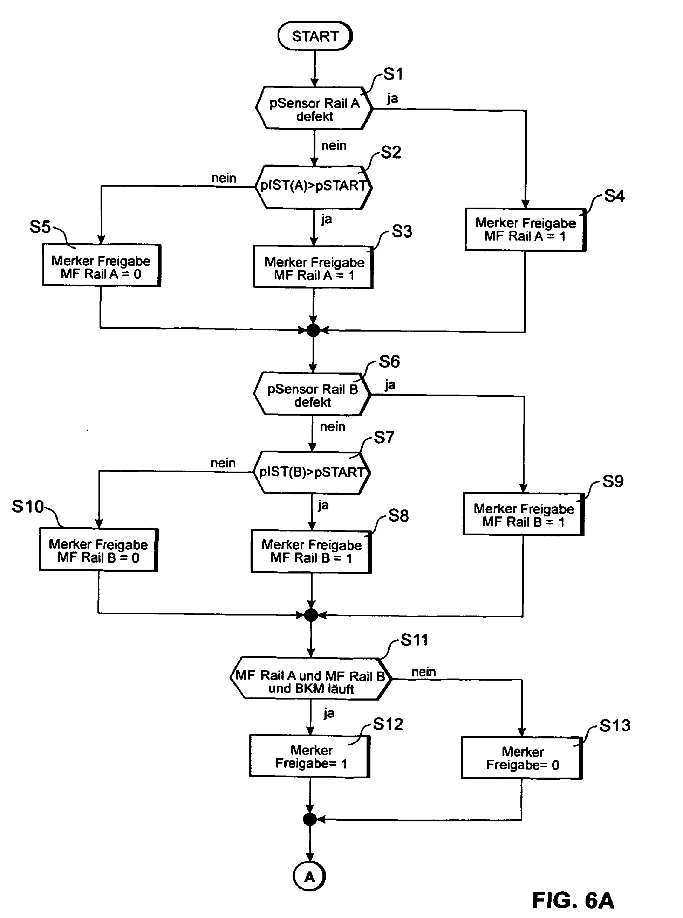

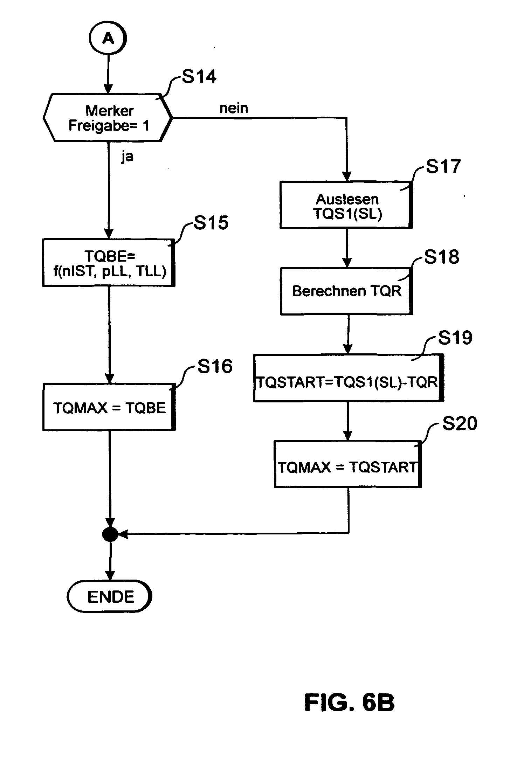

In der Figur 6 ist das Verfahren in einem Programm-Ablaufplan dargestellt. Die Figur 6 besteht aus den beiden Teilfiguren 6A und 6B. Bei S1 wird geprüft, ob der A-seitige Rail-Drucksensor defekt ist. Ist dies der Fall, so wird bei S4 ein Flag, welches im weiteren Text als Merker bezeichnet wird, für das A-seitige Rail auf Eins gesetzt. Ist der A-seitige Rail-Drucksensor nicht defekt, Abfrageergebnis S1: nein, so wird bei S2 geprüft, ob der A-seitige Ist-Raildruck pIST(A) den Startraildruck pSTART, zum Beispiel pSTART=300 bar, übersteigt. Ist dies nicht der Fall (pIST(A)<pSTART), so wird bei S5 der Merker für das A-seitige Rail auf den Wert Null gesetzt. Anderenfalls wird bei S3 der Merker für das A-seitige Rail auf den Wert Eins gesetzt. Danach wird bei S6 der B-seitige Rail-Drucksensor entsprechend geprüft. Ist dieser defekt, so wird bei S9 der Merker für das B-seitige Rail auf den Wert Eins gesetzt. Anderenfalls wird bei S7 geprüft, ob der B-seitige Ist-Raildruck pIST(B) größer als der Startraildruck pSTART ist. Ist dieser noch kleiner als der Startraildruck pSTART, Abfrageergebnis S7: nein, so wird bei S10 der Merker für das B-seitige Rail auf den Wert Null gesetzt. Ist der B-seitige Ist-Raildruck größer als der Startraildruck pSTART, so wird bei S8 der Merker für das B-seitige Rail auf den Wert Eins gesetzt.

Im Anschluss wird bei S11 geprüft, ob der der Merker für das A-seitige Rail auf Eins gesetzt ist, der Merker für das B-seitige Rail auf Eins gesetzt ist und eine verifizierte Drehzahl vorliegt. Ist dies der Fall, so wird bei S12 ein Merker Freigabe auf den Wert Eins gesetzt. Ist die Bedingung nicht erfüllt, so wird bei S13 der Merker Freigabe auf den Wert Null gesetzt. Bei S14, siehe Figur 6B, wird der Wert des Merkers abgefragt. Ist der Merker nicht auf Eins gesetzt, so wird bei S17 die erste Stützstelle des Wirkungsgrad-Kennfelds, hier: TQS1(SL)=-100 Nm, ausgelesen. Danach wird bei S18 das Reibmoment TQR über ein Reibmoment-Kennfeld berechnet und bei S19 das Startmoment TQSTART berechnet. Bei S20 wird dann das Maximalmoment TQMAX als Eingangsgröße für die Begrenzung des Soll-Moments auf das Startmoment TQSTART gesetzt. Wurde bei S14 festgestellt, dass der Merker den Wert Eins hat, so wird bei S15 das Betriebsmoment TQBE anhand der Ist-Drehzahl nIST, des Ladeluftdrucks pLL und der Ladelufttemperatur TLL berechnet. Danach wird bei S16 das Maximalmoment TQMAX auf das Betriebsmoment TQBE gesetzt. Damit ist der Programm-Ablaufplan beendet.

### Bezugszeichen

- 1: Brennkraftmaschine
- 2: Kraftstofftank
- 3A,B: Niederdruckpumpe
- 4A,B: Saugdrossel
- 5A,B: Hochdruckpumpe
- 6A,B: Rail
- 7A,B: Injektor
- 8A,B: Rail-Drucksensor
- 9: elektronisches Motorsteuergerät (ECU)
- 10: Drehzahlregler
- 11: Begrenzung
- 12: Wirkungsgrad-Kennfeld (WKF)
- 13: Berechnung
- 14: Injektorkennfeld
- 15: Regelstrecke
- 16: Filter
- 17: Berechnung
- 18: Vergleicher
- 19: Vergleicher
- 20: UND-Glied
- 21: UND-Glied
- 22: ODER-Glied
- 23: ODER-Glied
- 24: UND-Glied

## Patentansprüche

1. Verfahren zur Steuerung und Regelung einer Brennkraftmaschine (1) in V-Anordnung mit einem eigenständigen A-seitigen Common-Railsystem sowie einem eigenständigen B-seitigen Common-Railsystem, bei dem die Drehzahl (nMOT) der Brennkraftmaschine (1) in einem Drehzahl-Regelkreis geregelt wird und bei dem ein Soll-Moment (TQ(SL)) als Stellgröße des Drehzahlreglers (10) während des Startvorgangs auf ein Startmoment (TQSTART) zur Darstellung einer Soll-Einspritznullmenge begrenzt wird, dass eine positive Soll-Einspritzmenge (QSL) freigegeben wird (QSL>0), wenn eine verifizierte Motordrehzahl vorliegt, sowohl ein A-seitige Rail-Drucksensor (8A) als auch ein B-seitige Rail-Drucksensor (8B) fehlerfrei sind und sowohl der A-seitige Ist-Raildruck (pIST(A)) als auch der B-seitige Ist-Raildruck (pIST(B)) einen Startraildruck (pSTART) übersteigen.

2. Verfahren nach Anspruch 1,
**dadurch gekennzeichnet,**
**dass** eine positive Soll-Einspritzmenge (QSL) freigegeben wird (QSL>0), indem das Soll-Moment (TQ(SL)) auf ein Betriebsmoment (TQBE) als Maximalmoment (TQMAX) begrenzt wird, welches zumindest in Abhängigkeit der Ist-Drehzahl (nIST) berechnet wird.

3. Verfahren nach Anspruch 2,
**dadurch gekennzeichnet,**
**dass** eine positive Soll-Einspritzmenge (QSL) freigegeben wird (QSL>0), wenn eine verifizierte Motordrehzahl vorliegt und bei defektem A-seitigen Rail-Drucksensor (8A) sowie fehlerfreiem B-seitigen Rail-Drucksensor (8B) der B-seitige Ist-Raildruck (pIST(B)) den Startraildruck (pSTART) übersteigt.

4. Verfahren nach Anspruch 2,
**dadurch gekennzeichnet,**
**dass** eine positive Soll-Einspritzmenge (QSL) freigegeben wird (QSL>0), wenn eine verifizierte Motordrehzahl vorliegt und bei defektem B-seitigen Rail-Drucksensor (8B) sowie fehlerfreiem A-seitigen Rail-Drucksensor (8A) der A-seitige Ist-Raildruck (pIST(A)) den Startraildruck (pSTART) übersteigt.

5. Verfahren nach Anspruch 2,
**dadurch gekennzeichnet,**
**dass** eine positive Soll-Einspritzmenge (QSL) freigegeben wird (QSL>0), wenn bei defektem A-seitigen Rail-Drucksensor (8A) und defektem B-seitigen Rail-Drucksensor (8B) eine verifizierte Motordrehzahl vorliegt.

6. Verfahren nach einem der vorausgegangenen Ansprüche,
**dadurch gekennzeichnet,**
**dass** die Soll-Einspritzmenge (QSL) in Abhängigkeit des begrenzten Soll-Moments (TQ(SL)) und der Ist-Drehzahl (nIST) über ein Wirkungsgrad-Kennfeld (12) berechnet wird.

7. Verfahren nach Anspruch 6,
**dadurch gekennzeichnet,**
**dass** das Wirkungsgrad-Kennfeld (12) in der Form ausgeführt wird, dass für die erste Stützstelle des Soll-Moments (TQ(SL)) unabhängig von der Ist-Drehzahl (nIST) eine Soll-Einspritzmenge (QSL) von null (QSL=0), die Soll-Einspritznullmenge, berechnet wird.

8. Verfahren nach den Ansprüchen 6 und 7,
**dadurch gekennzeichnet,**
**dass** anstelle des begrenzten Soll-Moments (TQ(SL)) ein Soll-Summenmoment (TQS(SL)) von Soll-Moment (TQ(SL)) und Reibmoment (TQR) als Eingangsgröße des Wirkungsgrad-Kennfelds (12) gesetzt wird.

9. Verfahren nach einem der vorausgegangenen Ansprüche,
**dadurch gekennzeichnet,**
**dass** die Bestromungsdauer (BD) zur Ansteuerung der Injektoren zumindest in Abhängigkeit der Soll-Einspritzmenge (QSL) über ein Injektorkennfeld (14) berechnet wird.

## Claims

1. Method for performing open-loop and closed-loop control of an internal combustion engine (1) in a V arrangement with an independent A-side, common rail system and an independent B-side common rail system, in which the rotational speed (nMOT) of the internal combustion engine (1) is closed-loop controlled in a rotational speed control circuit, and in which a set point torque (TQ(SL)) is limited as a manipulated variable of the rotational speed controller (10) to a starting torque (TQSTART) during the starting process in order to form a setpoint injection zero quantity, in that a positive setpoint injection quantity (QSL) is enabled (QSL>0) if a verified engine rotational speed is present, both an A-side rail pressure sensor (8A) and a B-side rail pressure sensor (8B) are fault-free and both the A-side actual rail pressure (pACT(A)) and the B-side actual rail pressure (pACT(B)) exceed a starting rail pressure (pSTART).

2. Method according to Claim 1,
**characterized**
**in that** a positive setpoint injection quantity (QSL) is enabled (QSL>0) in that the setpoint torque (TQ(SL)) is limited to an operating torque (TQBE) as a maximum torque (TQMAX) which is calculated at least as a function of the actual rotational speed (nACT).

3. Method according to Claim 2,
**characterized**
**in that** a positive setpoint injection quantity (QSL) is enabled (QSL>0) if a verified engine rotational speed is present and the B-side actual rail pressure (pACT(B)) exceeds the starting rail pressure (pSTART) when there is a defective A-side rail pressure sensor (8A) and a fault-free B-side rail pressure sensor (8B).

4. Method according to Claim 2,
**characterized**
**in that** a positive setpoint injection quantity (QSL) is enabled (QSL>0) if a verified engine rotational speed is present and the A-side actual rail pressure (pACT(A)) exceeds the starting rail pressure (pSTART) when there is defective B-side rail pressure sensor (8B) and a fault-free A-side rail pressure sensor (8A).

5. Method according to Claim 2,
**characterized**
**in that** a positive setpoint injection quantity (QSL) is enabled (QSL>0) if a verified engine rotational speed is present when there is a defective A-side rail pressure sensor (8A) and a defective B-side rail pressure sensor (8B).

6. Method according to one of the preceding claims,
**characterized**
**in that** the setpoint injection quantity (QSL) is calculated as a function of the limited setpoint torque (TQ(SL)) and the actual rotational speed (nACT) is calculated by means of an efficiency characteristic diagram (12).

7. Method according to Claim 6,
**characterized**
**in that** the efficiency characteristic diagram (12) is embodied in such a form that a setpoint injection quantity (QSL) of zero (QSL=0), the setpoint injection zero quantity is calculated for the first reference point of the setpoint torque ((TQ(SL)) independently of the actual rotational speed (nACT).

8. Method according to Claims 6 and 7,
**characterized**
**in that** instead of the limited setpoint torque (TQ(SL)) a setpoint total torque (TQS(SL)) of the setpoint torque (TQ(SL)) and frictional torque (TQR) is set as the input variable of the efficiency characteristic diagram (12).

9. Method according to one of the preceding claims,
**characterized**
**in that** the energization period (BD) for actuating the injectors is calculated at least as a function of the setpoint injection quantity (QSL) by means of an injector characteristic diagram (14).

## Revendications

1. Procédé de commande et de régulation d'un moteur à combustion interne (1) à disposition en V comprenant un système à rampe commune autonome du côté A ainsi qu'un système à rampe commune autonome du côté B, selon lequel la vitesse de rotation (nMOT) du moteur à combustion interne (1) est régulée dans un circuit de régulation de vitesse de rotation et selon lequel un couple de consigne (TQ(SL)) faisant office de grandeur de commande du régulateur de vitesse de rotation (10) est limité pendant le processus de démarrage à un couple de démarrage (TQSTART) pour représenter une quantité nulle d'injection de consigne, une quantité d'injection de consigne (QSL) positive étant libérée (QSL > 0) lorsqu'une vitesse de rotation de moteur vérifiée est présente, lorsqu'un capteur de pression de rampe côté A (8A) ainsi qu'un capteur de pression de rampe côté B (8B) sont tous deux exempts de défaut et lorsque la pression de rampe réelle côté A (pIST(A)) ainsi que la pression de rampe réelle côté B (pIST(B)) dépassent toutes les deux une pression de rampe de démarrage (pSTART).

2. Procédé selon la revendication 1, **caractérisé en ce qu'**une quantité d'injection de consigne (QSL) positive est libérée (QSL > 0) **en ce que** le couple de consigne (TQ(SL)) est limité à un couple de fonctionnement (TQBE) faisant office de couple maximum (TQMAX) qui est calculé au moins en fonction de la vitesse de rotation réelle (nIST).

3. Procédé selon la revendication 2, **caractérisé en ce qu'**une quantité d'injection de consigne (QSL) positive est libérée (QSL > 0) lorsqu'une vitesse de rotation de moteur vérifiée est présente et que, avec un capteur de pression de rampe côté A (8A) défectueux et un capteur de pression de rampe côté B (8B) exempt de défaut, la pression de rampe réelle côté B (pIST(B)) dépasse la pression de rampe de démarrage (pSTART).

4. Procédé selon la revendication 2, **caractérisé en ce qu'**une quantité d'injection de consigne (QSL) positive est libérée (QSL > 0) lorsqu'une vitesse de rotation de moteur vérifiée est présente et que, avec un capteur de pression de rampe côté B (8B) défectueux et un capteur de pression de rampe côté A (8A) exempt de défaut, la pression de rampe réelle côté A (pIST(A)) dépasse la pression de rampe de démarrage (pSTART).

5. Procédé selon la revendication 2, **caractérisé en ce qu'**une quantité d'injection de consigne (QSL) positive est libérée (QSL > 0) lorsqu'avec un capteur de pression de rampe côté A (8A) défectueux et un capteur de pression de rampe côté B (8B) défectueux, une vitesse de rotation de moteur vérifiée est présente.

6. Procédé selon l'une des revendications précédentes, **caractérisé en ce que** la quantité d'injection de consigne (QSL) est calculée en fonction du couple de consigne (TQ(SL)) limité et de la vitesse de rotation réelle (nIST) par le biais d'un diagramme caractéristique de rendement (12).

7. Procédé selon la revendication 6, **caractérisé en ce que** le diagramme caractéristique de rendement (12) est réalisé sous une forme telle que pour le premier point de référence du couple de consigne (TQ(SL)), une quantité d'injection de consigne (QSL) nulle (QSL = 0), la quantité nulle d'injection de consigne, est calculée indépendamment de la vitesse de rotation réelle (nIST).

8. Procédé selon les revendications 6 et 7, **caractérisé en ce qu'**au lieu du couple de consigne (TQ(SL)) limité, un couple total de consigne (TQS(SL)) du couple de consigne (TQ(SL)) et du couple de friction (TQR) est défini comme grandeur d'entrée du diagramme caractéristique de rendement (12).

9. Procédé selon l'une des revendications précédentes, **caractérisé en ce que** la durée d'alimentation électrique (BD) pour la commande des injecteurs est calculée au moins en fonction de la quantité d'injection de consigne (QSL) par le biais d'un diagramme caractéristique d'injecteur (14).
